# EUROPÄISCHE PATENTANMELDUNG

(11) **EP 4 663 343 A1**
(43) Veröffentlichungstag der Anmeldung: **17.12.2025**
(21) Anmeldenummer: 25181194.9
(22) Anmeldetag: 05.06.2025
(51) Int. Cl.: B23Q 11/08, F16P 1/02, F16P 3/02

(54) **TELESKOP-AUSZUGSDÄMPFUNG**

(30) Priorität: 11.06.2024 DE 202024103081 U
(71) Anmelder: Kabelschlepp GmbH - Hünsborn, 57482 Wenden-Hünsborn (DE)
(72) Erfinder: Diebel, Michael, 35687 Dillenburg (DE)
(74) Vertreter: Neumann, Ditmar

(57) **Zusammenfassung**

Die Erfindung betrifft eine Abdeckung, insbesondere für einen Arbeitsbereich einer Werkzeugmaschine, wobei die Abdeckung mehrere Abdeckelemente (5.1, 5.2), wobei jeweils zwei benachbarte Abdeckelemente (5.1, 5.2) ein inneres (5.1) und ein äußeres (5.2) Abdeckelement bilden, die teleskopartig in- und auseinander schiebbar sind, aufweist. Jedes Abdeckelement (5.1, 5.2) weist zwei Seitenteile, eine Oberwand und eine Rückwand (6.1, 6.2) auf. Jedes äußere Abdeckelement (5.2) weist mindestens einen Mitnehmer (2) auf. Jedes innere Abdeckelement (5.1) umfasst mindestens eine Dämpfungseinheit (1), umfassend einen Halter (1.1), einen an dem Halter (1.1) angeordneten Auszugsdämpfer (1.2) und einen an dem Halter (1.1) angeordneten Einzugsdämpfer (1.3), aufweist. Der Halter (1.1) ist mit dem inneren Abdeckelement (5.1) verbunden. Der Auszugsdämpfer (1.2) steht mit einem Mitnehmer (2) des äußeren Abdeckelements (5.2) und der Einzugsdämpfer (1.3) mit der Rückwand (6.2) des äußeren Abdeckelements (5.2) in Wirkverbindung.

## Beschreibung

Der Gegenstand der Erfindung bezieht sich auf eine Abdeckung, insbesondere für einen Arbeitsbereich einer Werkzeugmaschine, umfassend wenigstens eine teleskopierbare Abdeckeinheit, welche wenigstens zwei Abdeckelemente aufweist, die relativ zueinander bewegbar sind.

Zum Schutz von Bauteilen, insbesondere eines Arbeitsbereichs einer Werkzeugmaschine, vor Beschädigungen oder Verschmutzungen werden Abdeckungen verwendet. Diese schützen die Bauteile insbesondere vor Spänen, Kühlmitteln und Schmiermitteln, die bei der Bearbeitung eines Werkstücks anfallen. Es sind unterschiedliche Formen von Abdeckungen für einen Arbeitsbereich einer Werkzeugmaschine bekannt.

Es sind zum einen solche Abdeckungen bekannt, die eine Mehrzahl von Abdeckelementen aufweisen, die synchron gekoppelt sind. Sobald ein Abdeckelement bewegt wird, bewegen sich die weiteren Abdeckelemente mit, sie werden synchron verschoben. Eine solche synchrone Koppelung der Abdeckelemente wird bspw. durch sogenannte Schergitter erreicht, die mit den Abdeckelemente verbunden sind. Diese haben jedoch den Nachteil, dass jeden Abdeckelement bewegt wird, auch wenn nur kurze Verfahrwege notwendig sind.

Zum Abdecken, insbesondere eines Arbeitsbereichs einer Werkzeugmaschine, werden auch sogenannte Teleskopabdeckungen verwendet. Eine wesentliche Anforderung an die Abdeckungen besteht darin, einen hohen Schutz bei geringem Bauraum zu gewährleisten. Bei einer Teleskopeinrichtung kann auf eine aufwendige Kopplungsstruktur verzichtet werden, da jedes Abdeckelement jeweils nur mit den benachbarten Abdeckelementen gekoppelt ist.

Eine Teleskopabdeckung weist teleskopartig ineinander schiebbare Abdeckelemente auf. Jedes Abdeckelement hat eine erste und eine zweite Seitenwand, eine mit den Seitenwänden verbundene Oberwand sowie eine Rückwand. Die Rückwand ist an einer Stirnseite eines Abdeckelements angeordnet und kann über die Seitenwände hinausragen. Ein Abdeckelement weist eine Abdeckelementartige Geometrie auf. Innenflächen der Wände sind jeweils in das Innere eines Abdeckelements orientiert. Außenflächen der Wände sind nach außen hin orientiert.

Teleskopabdeckungen haben die Besonderheit, dass beim Auseinanderschieben der Abdeckung jedes Abdeckelement einzeln aus einer Ruhelage heraus von einem eingezogenen in einen ausgezogenen Zustand verfahren wird. Erst wenn ein Abdeckelement vollständig ausgezogen ist, wird das benachbarte Abdeckelement aus einer Ruhelage heraus bewegt, bis dieses ebenfalls vollständig ausgezogen ist.

Beim Ineinanderschieben der Abdeckung wird jedes Abdeckelement einzeln aus einer Ruhelage heraus von einem ausgezogenen in einen eingezogenen Zustand verfahren. Erst, wenn ein Abdeckelement vollständig eingezogen ist, wird das benachbarte Abdeckelement aus einer Ruhelage heraus bewegt, bis dieses ebenfalls vollständig eingezogen ist.

Die Bewegung der Abdeckelemente erfolgt dadurch, dass Mitnehmer oder Überlappungen der an den Abdeckelementen vorhanden sind, so dass ein Abdeckelement einen benachbartes Abdeckelement mitbewegt, sobald der Mitnehmer eines Abdeckelements an einen Anschlag oder die Rückwand des anderen Abdeckelements anschlägt. Hieraus resultiert ein Mitnahmeimpuls, der ungedämpft zu Bauteil- und Geräuschbelastungen führt.

Zum Schutz von im Wesentlichen horizontal verlaufenden Führungsbahnen einer Werkzeugmaschine werden die Abdeckelemente auf einem Führungsrand der Werkzeugmaschine geführt. Bei einer vertikalen Anordnung einer teleskopartig ausgebildeten Abdeckung wird diese seitlich geführt, um einen einwandfreien Lauf zu gewährleisten.

Die Erfindung bezieht sich auf eine Teleskopabdeckung mit einzeln beweglichen Abdeckelementen. Dabei werden die Abdeckelemente jeweils durch das "Mitnehmen" eines Abdeckelements durch den benachbarten Abdeckelement jeweils aus einer Ruhelage heraus beschleunigt. Bei großen Maschinen sind die einzelnen Abdeckelemente vergleichsweise schwer. Mit steigender Anzahl der mitgenommenen Abdeckelemente erhöht sich die zu bewegende Masse und damit die aufzubringende Bewegungsenergie. Mit Zunahme der Verfahrwege und -geschwindigkeit können die Anschlag-Mitnahmeimpulse der Abdeckelemente sehr intensiv sein.

In der Folge sind sämtliche Bauteile hohen Kräften und Momente ausgesetzt, was die Lebensdauer der Teleskopabdeckung reduzieren kann. Neben der Materialermüdung folgen hohe Geräuschbelastungen, die für Bedienpersonen ein Gesundheits- und Sicherheitsrisiko darstellen können.

Dämpfungselemente für Teleskopabdeckungen sind grundsätzlich bekannt. Die bekannten Dämpfungselemente sind jedoch auf die Dämpfung von Stößen gerichtet, die entweder beim Einzug oder beim Auszug einer Abdeckung wirken. Es treten jedoch gemäß der Bestimmung einer Teleskopabdeckung Stöße in beide Richtungen auf. Zudem gestaltet sich ein Austausch der Dämpfungselemente oft aufwändig.

Daher liegt der Erfindung die Aufgabe zugrunde, eine Abdeckung, insbesondere für einen Arbeitsbereich einer Werkzeugmaschine, bereitzustellen, mit der Stöße sowohl in eine Auszugsrichtung als auch entgegen der Auszugsrichtung gedämpft werden können. Zudem soll die Abdeckung möglichst geräuschemissionsarm verfahrbar sein. Weitere Ziele der Erfindung sind es, eine Teleskopabdeckung mit geringer Verschleißanfälligkeit und hoher Montagefreundlichkeit bereitzustellen.

Diese Aufgaben werden gelöst durch eine Teleskopabdeckung gemäß Anspruch 1. Die abhängigen Ansprüche sind auf vorteilhafte Weiterbildungen der Erfindung gerichtet.

Es wird Abdeckung, insbesondere für einen Arbeitsbereich einer Werkzeugmaschine vorgeschlagen. Die Abdeckung umfasst mehrere Abdeckelemente. Jeweils zwei benachbarte Abdeckelemente bilden ein inneres und ein äußeres Abdeckelement. Die Abdeckelemente sind teleskopartig in- und auseinanderschiebbar. Teleskopartig bedeutet in diesem Zusammenhang, dass die Abdeckelemente in eine Auszugsrichtung auseinander schiebbar und entgegen der Auszugsrichtung ineinander schiebbar sind.

Weist die Abdeckung drei oder mehr Abdeckelemente auf, so fungiert mindestens ein Abdeckelement sowohl als inneres, als auch als äußeres Abdeckelement. Bei einer Abdeckung mit genau drei Abdeckelementen fungiert das mittlere als inneres Abdeckelement relativ zu dem zu einer Seite benachbarten Abdeckelement und als äußeres Abdeckelement relativ zu dem zu der anderen Seite benachbarten Abdeckelement. Nur das erste und letzte Abdeckelement einer Abdeckung fungiert jeweils nur als inneres bzw. äußeres Abdeckelement.

Jedes Abdeckelement weist zwei Seitenteile, eine Oberwand und eine Rückwand auf. Sind die Abdeckelemente ineinander geschoben, ist das innere Abdeckelement weitestgehend von dem äußeren Abdeckelement aufgenommen.

Jedes äußere Abdeckelement weist mindestens einen Mitnehmer auf. Ein Mitnehmer kann vorsprungartig, sich nach innen erstreckend, an einem Seitenteil oder an der Oberwand des äußeren Abdeckelements angeordnet sein. Der Mitnehmer kann auch durch eine Platte gebildet sein, die an der Innenseite des Abdeckelements befestigt ist. Es ist auch möglich, einen Mitnehmer durch eine innenliegend umlaufende Leiste bereitzustellen.

Erfindungsgemäß weist jedes innere Abdeckelement mindestens eine Dämpfungseinheit auf. Eine Dämpfungseinheit ist eine Baugruppe, umfassend einen Halter, einen Auszugsdämpfer und einen Einzugsdämpfer. Sowohl der Auszugsdämpfer als auch der Einzugsdämpfer sind an dem Halter angeordnet. Der Halter ist mit dem inneren Abdeckelement verbunden. Somit ist die Verbindung zwischen jeder Dämpfungseinheit und dem inneren Abdeckelement über den Halter jeder Dämpfungseinheit realisiert.

Der Auszugsdämpfer steht in Wirkverbindung mit einem Mitnehmer des äußeren Abdeckelements. Bei einer Auszugsbewegung schlägt ein Mitnehmer des äußeren Abdeckelements an den Auszugsdämpfer an. Dadurch wird ein Mitnahmeimpuls, der durch den Anschlag vom Mitnehmer des äußeren Abdeckelements an das innere Abdeckelement initiiert wird, gedämpft.

Der Einzugsdämpfer steht in Wirkverbindung mit der Rückwand des äußeren Abdeckelements. Werden die Abdeckelemente ineinander geschoben, so stößt die Rückwand des äußeren Abdeckelements an den Einzugsdämpfer der Dämpfungseinheit des inneren Abdeckelements an. Dadurch wird ein Mitnahmeimpuls, der durch den Anschlag von der Rückwand des äußeren Abdeckelements an das innere Abdeckelement initiiert wird, gedämpft.

Durch die Dämpfungseinheit können somit sowohl Impulse, die beim Auseinanderschieben, als auch solche, die beim Ineinanderschieben der Abdeckelemente, auftreten, gedämpft werden.

Mit der vorgeschlagenen Abdeckung lassen sich Stöße vorteilhaft dämpfen, sodass die Lebensdauer der Abdeckung verlängert wird und Geräuschbelastungen reduziert werden. Dabei sind die vorgeschlagenen Dämpfungseinheiten besonders montagefreundlich und lassen sich auch bei bereits in Betrieb genommenen Teleskopabdeckungen nachrüsten.

Gemäß einer vorteilhaften Ausgestaltung ist der Halter lösbar mit dem inneren Abdeckelement verbunden. Die lösbare Verbindung kann beispielsweise durch Schrauben realisiert werden. Eine Schraubenverbindung zwischen Halter und innerem Abdeckelement bringt den besonderen Vorteil, dass eine Dämpfungseinheit leicht austauschbar ist. Somit können Standzeiten der Abdeckung, die letztendlich auch Standzeiten der Maschine sind, reduziert und folglich Kosten gespart werden.

Gemäß einer weiteren vorteilhaften Ausgestaltung ist der Halter an einer Außenfläche der Rückwand des Abdeckelements angeordnet. Als besonders vorteilhaft hat es sich erwiesen, wenn das mindestens eine Dämpfungseinheit an der äußeren Kante der Außenfläche der Rückwand befestigt ist. Es ist auch möglich, dass mehrere Dämpfungseinheiten verteilt entlang der äußeren Kante der Außenfläche der Rückwand befestigt sind. Somit können Impulse effektiv gedämpft werden und ein gleichmäßiges Spaltmaß eigehalten werden. Die Wahrscheinlichkeit eines Verkantens der Abdeckelemente relativ zueinander wird reduziert.

Weiterhin ist ein verringerter Platzbedarf im Vergleich zu herkömmlichen Dämpfungssystemen nötig. Die erfindungsgemäße Abdeckung sind Dämpfungselemente an den Rückwänden jedes inneren Abdeckelements vor. Hier befindet sich ohnehin ein technisch bedingter Freiraum, sodass kein zusätzlicher Bauraum für die Dämpfungseinheiten vorgesehen werden muss. Bei der erfindungsgemäßen Abdeckung ist keine Kraftumlenkung notwendig, was eine effiziente und verschleißarme Dämpfung ermöglicht.

Gemäß einer vorteilhaften Ausgestaltung der Dämpfungseinheit weist der Auszugsdämpfer und/oder der Einzugsdämpfer mindestens eine Schraubenfeder auf. Durch die Wahl einer oder mehrerer Schraubenfedern mit bestimmten Federkonstanten lassen sich präzise gewünschte Dämpfungsparameter in Abhängigkeit der Größe und des Gewichts der Abdeckung einstellen. Dies ist insbesondere vorteilhaft, da die Mitnahmeimpulse, die durch die Dämpfungseinheit gedämpft werden sollen, in Abhängigkeit der Anzahl und Größe der mitbewegten Abdeckelemente variiert. So ist es möglich, eine Dämpfungseinheit unterschiedlich auszugestalten.

Gemäß einer weiteren vorteilhaften Ausgestaltung der Dämpfungseinheit weist der Auszugsdämpfer und/oder der Einzugsdämpfer mindestens ein Elastomer auf. Durch dieses kann ebenfalls präzise eine gewünscht Dämpfungswirkung eingestellt werden. Das Elastomer kann an dem Halter angeordnet und mit dem Auszugsdämpfer bzw. dem Einzugsdämpfer verbunden sein. Es ist auch möglich, dass der Auszugsdämpfer und/oder der Einzugsdämpfer vollständig aus einem Elastomer gefertigt ist.

Vorzugsweise weist das Elastomer eine Shore A-Härte von 55 bis 70 auf.

Durch die federbelastetes Dämpfungseinheit bzw. der Einsatz von Elastomeren wird eine einfache Anpassung der Dämpfungsparameter an die spezifische Belastung der Abdeckung ermöglicht.

Gemäß einer weiteren vorteilhaften Ausgestaltung ist der Einzugsdämpfer zapfenförmig ausgebildet. Dies hat den Vorteil, dass durch die Zapfengeometrie auch ein Abstand zwischen den Rückwänden zweier benachbarter Abdeckelemente eingestellt werden kann.

Weitere Vorteile und Einzelheiten der Erfindung sowie das technische Umfeld werden anhand der Figuren näher erläutert. Die Figuren zeigen besonders bevorzugte Abläufe und Ausführungsbeispiele, auf die die Erfindung jedoch nicht zu beschränken ist. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine perspektivische Ansicht einer ersten Ausführungsform einer Dämpfungseinheit,
- Fig. 1.1: eine Rückansicht der Dämpfungseinheit nach Fig. 1
- Fig. 2:: eine Querschnittsansicht einer zweiten Ausführungsform Dämpfungseinheit,
- Fig. 3:: eine perspektivische Ansicht einer Teleskopabdeckung während des Ausziehens in die Auszugsrichtung A und
- Fig. 4:: eine perspektivische Ansicht einer Teleskopabdeckung während des Einziehens entgegen der Auszugsrichtung A

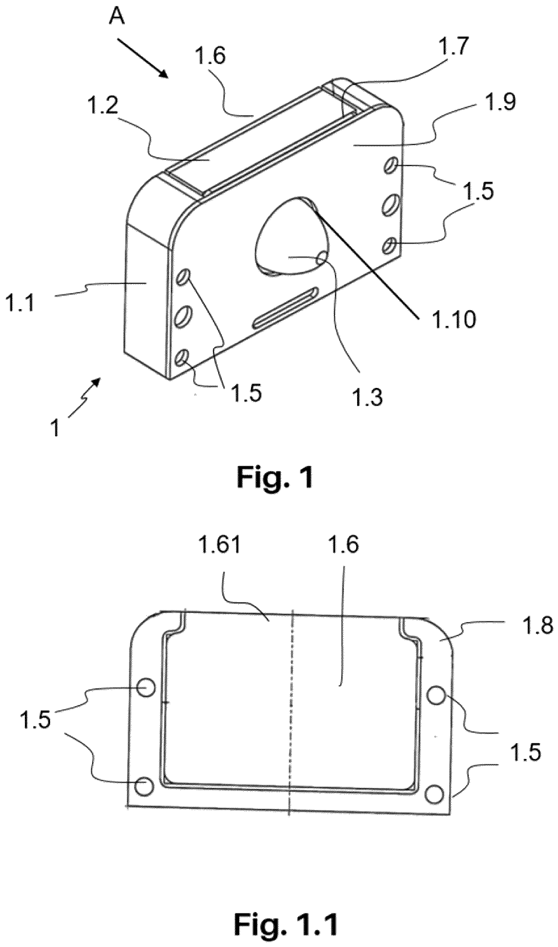

Figur 1 zeigt in einer perspektivischen Ansicht eine erste Ausführungsform einer Dämpfungseinheit 1. Zur Orientierung ist eine Auszugsrichtung A, in der eine Abdeckung ausziehbar ist, eingezeichnet.

Die Dämpfungseinheit 1 umfasst einen Halter 1.1, einen Einzugsdämpfer 1.3, einen Auszugsdämpfer 1.2 und mehrere Bohrungen 1.5. Sowohl der Einzugsdämpfer 1.3 als auch der Auszugsdämpfer 1.2 sind relativ zum Halter 1.1 beweglich angeordnet. Der Einzugsdämpfer 1.3 ist zapfenförmig ausgebildet und ragt aus dem Halter 1.1 heraus. Die Bohrungen 1.5 sind als Durchgangsbohrungen ausgebildet.

In der in Fig. 1 dargestellten bevorzugten Ausführungsform des Halters 1.1 weist dieser einen C-förmigen Rahmen 1.8 auf. Der Rahmen 1.8 ist mit einer Frontplatte 1.9 verbunden. Die Frontplatte 1.9 weist eine Öffnung 1.10 auf, durch welche sich der Auszugsdämpfer 1.2 erstreckt.

Der Auszugsdämpfer 1.2 ist zwischen einer ersten 1.6 und einer zweiten 1.7 Dämpfungsplatte angeordnet. Die erste Dämpfungsplatte 1.6 weist einen Abschnitt 1.61 auf der mit einem Mitnehmer 2, auf den noch im Weiteren eingegangen wird, zusammen. Der Abschnitt 1.61 erstreckt sich in den offenen Bereich des C-förmigen Rahmens 1.8. Der Auszugsdämpfer 1.2, die erste und die zweite Dämpfungsplatte 1.6, 1.7 sind vorzugsweise deckungsgleich.

Der Einzugsdämpfer 1.3 kann mit der zweiten Dämpfungsplatte 1.7 insbesondere lösbar verbunden sein. Es besteht auch die Möglichkeit, dass der Einzugsdämpfer 1.3 einen Bereich aufweist, der zwischen der Frontplatte 1.9 und der zweiten Dämpfungsplatte 1.7 angeordnet ist, wobei der Querschnitt des Bereichs größer ist als der Durchmesser der Öffnung 1.10.

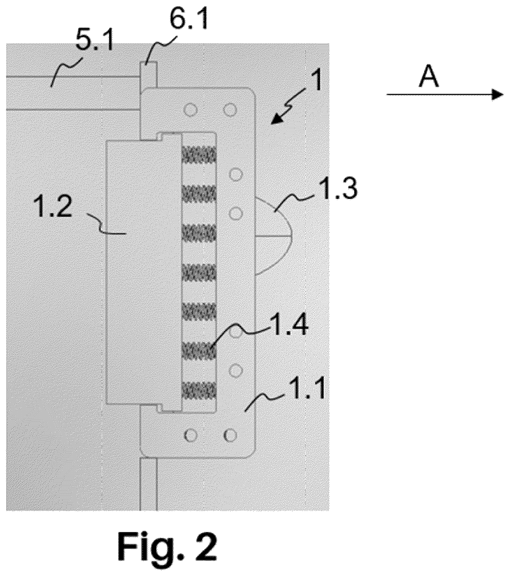

Figur 2 zeigt die Dämpfungseinheit 1 auf Figur 1 montier in einer Querschnittsansicht. Daran lässt sich erkennen, dass im innerhalb des Halters 1.1 mehrere Schraubenfedern 1.4 angeordnet sind. Durch die Schraubenfeder 1.4 sind der Einzugsdämpfer 1.2 und der Auszugsdämpfer 1.3 federbelastet. Der Einzugsdämpfer 1.2 und/oder der Auszugsdämpfer 1.3 können zur Verbesserung der Dämpfungswirkungen und zur Reduzierung von Geräuschen aus einem Elastomer gebildet sein.

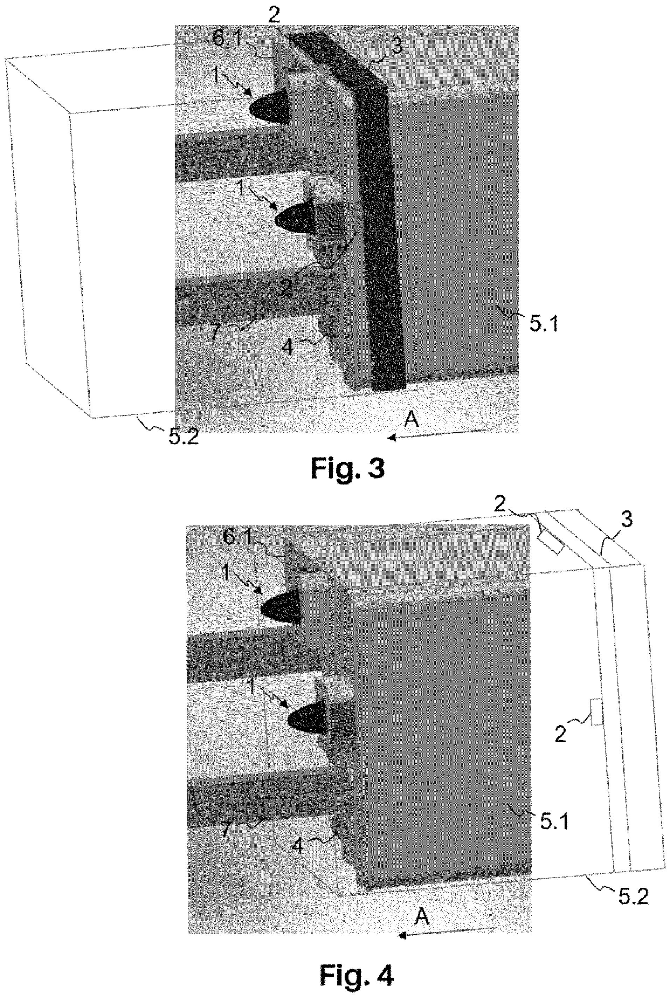

Figur 3 zeigt eine perspektivische Ansicht einer Teleskopabdeckung während des Ausziehens in die Auszugsrichtung A. Ein inneres Abdeckelement 5.1 weist eine Rückwand 6.1 auf. An der Rückwand 6.1 sind mehrere Dämpfungseinheiten 1 befestigt. In Figur 3 sind zwei Dämpfungseinheiten 1 an der Rückwand 6.1 befestigt. Diese Anzahl ist beispielhaft und kann beliebig verändert werden, um die gewünschten Dämpfungsparameter zu beeinflussen.

Das Innere Abdeckelement 5.1 ist über mehrere Rollen 4 auf Führungsschienen 7 verfahrbar. Da dieser Mechanismus aus dem Stand der Technik bekannt ist, wird auf diesen an dieser Stelle nicht weiter eingegangen. Weiterhin sind zwei Mitnehmer 2 und ein Abstreifer 3 ersichtlich. Mitnehmer 2 und Abstreifer 3 sind innen an dem äußeren Abdeckelement 5.2 angebracht.

Die Mitnehmer 2 sind jeweils als eine flache Platte ausgebildet, die durch Schraubenverbindungen mit dem äußeren Abdeckelement 5.2 befestigt sind. Der Abstreifer 3 ist als ein innen am äußeren Abdeckelement 5.2 umlaufenden Profil ausgebildet. Der Abstreifer 3 kann beispielsweise aus Gummi gebildet sein und streift bei einer Relativbewegung zwischen innerem Abdeckelement 5.1 und äußerem Abdeckelement 5.2 Flüssigkeiten und Schmutz von Äußeren des inneren Abdeckelements 5.1 ab.

Das äußere Abdeckelement 5.2 und damit die Mitnehmer 2 und der Abstreifer 3 werden beim Ausziehen der Teleskopabdeckung in die Auszugsrichtung A bewegt. Es kommt zum Anschlag des Mitnehmers 2 an den Auszugsdämpfer 1.2 der Dämpfungseinheit 1. Somit wird einerseits das Innere Abdeckelement 5.1 durch das äußere Abdeckelement 5.2 mitgenommen und andererseits der dabei auftretende Mitnahmeimpuls gedämpft. Ist Dämpfungseinheit 1 so ausgebildet, dass der Auszugsdämpfer 1.2 zwischen einer ersten 1.6 und einer zweiten 1.7 Dämpfungsplatte angeordnet ist, so kommt der Mitnehmer 2 zur Anlage an die erste Dämpfungsplatte 1.6, die auf den Auszugsdämpfer 1.2 einwirkt. Insbesondere durch die erste Dämpfungsplatte 1.6 wird eine Lebensdauer des Auszugsdämpfers 1.2 erhöht.

Figur 4 zeigt eine perspektivische Ansicht einer Teleskopabdeckung während des Einziehens entgegen der Auszugsrichtung A. Eine Rückwand 6.2 des äußeren Abdeckelements liegt an dem zapfenförmigen Einzugsdämpfer 1.3 an. Dieser ist aus Elastomer gebildet und federbelastet an dem Halter 1.1 befestigt. Das äußere Abdeckelement 5.2 und damit die Rückwand 6.1 wird entgegen der Auszugsrichtung A bewegt. Es kommt zum Anschlag der Rückwand 6.2 an den Einzugsdämpfer 1.3 der Dämpfungseinheit 1. Somit wird das innere Abdeckelement 5.1 durch das äußere Abdeckelement 6.1 mitgenommen der dadurch auftretende Mitnahmeimpuls gedämpft.

### Bezugszeichenliste

- 1: Dämpfungseinheit
- 1.1: Halter
- 1.2: Einzugsdämpfer
- 1.3: Auszugsdämpfer
- 1.4: Schraubenfeder
- 1.5: Bohrung
- 1.6: erste Dämpfungsplatte
- 1.61: Abschnitt
- 1.7: zweite Dämpfungsplatte
- 1.8: Rahmen
- 1.9: Deckplatte
- 1.10: Öffnung
- 2: Mitnehmer
- 3: Abstreifer
- 4: Rolle
- 5.1: inneres Abdeckelement
- 5.2: äußeres Abdeckelement
- 6.1: Rückwand des inneren Abdeckelements
- 6.2: Rückwand des äußeren Abdeckelements
- 7: Führungsschiene
- A: Auszugsrichtung

## Patentansprüche

1. Abdeckung, insbesondere für einen Arbeitsbereich einer Werkzeugmaschine, umfassend
mehrere Abdeckelemente (5.1, 5.2), wobei jeweils zwei benachbarte Abdeckelemente (5.1, 5.2) ein inneres (5.1) und ein äußeres (5.2) Abdeckelement bilden, die teleskopartig in- und auseinander schiebbar sind,
wobei jedes Abdeckelement (5.1, 5.2) zwei Seitenteile, eine Oberwand und eine Rückwand (6.1, 6.2) aufweist,
jedes äußere Abdeckelement (5.2) mindestens einen Mitnehmer (2) aufweist, **dadurch gekennzeichnet, dass**
jedes innere Abdeckelement (5.1) mindestens eine Dämpfungseinheit (1), umfassend einen Halter (1.1), einen an dem Halter (1.1) angeordneten Auszugsdämpfer (1.2) und einen an dem Halter (1.1) angeordneten Einzugsdämpfer (1.3), aufweist, wobei der Halter (1.1) mit dem inneren Abdeckelement (5.1) verbunden ist, und
der Auszugsdämpfer (1.2) mit einem Mitnehmer (2) des äußeren Abdeckelements (5.2) und
der Einzugsdämpfer (1.3) mit der Rückwand (6.2) des äußeren Abdeckelements (5.2) in Wirkverbindung steht.

2. Abdeckung nach Anspruch 1, **dadurch gekennzeichnet, dass** der Halter (1.1) lösbar mit dem inneren Abdeckelement (5.1) verbunden ist.

3. Abdeckung nach Anspruch 1 oder 2, **dadurch gekennzeichnet, dass** der Halter (1.1) an einer Außenfläche der Rückwand (6.1) des inneren Abdeckelements (5.1) angeordnet ist.

4. Abdeckung nach Anspruch 3, **dadurch gekennzeichnet, dass** der Auszugsdämpfer (1.2) und/oder der Einzugsdämpfer (1.3) mindestens eine Schraubenfeder (1.4) aufweist.

5. Abdeckung nach Anspruch 3 oder 4, **dadurch gekennzeichnet, dass** der Auszugsdämpfer (1.2) und/oder der Einzugsdämpfer (1.3) ein Elastomer aufweist.

6. Abdeckung nach Anspruch 5, **dadurch gekennzeichnet, dass** das Elastomer eine Shore A-Härte von 55 bis 70 aufweist.

7. Abdeckung nach einem der vorstehenden Ansprüche, **dadurch gekennzeichnet, dass** der Einzugsdämpfer (1.3) zapfenförmig ausgebildet ist.
